# EUROPÄISCHE PATENTANMELDUNG

(11) **EP 3 958 359 A1**
(43) Veröffentlichungstag der Anmeldung: **23.02.2022**
(21) Anmeldenummer: 20191345.6
(22) Anmeldetag: 17.08.2020
(51) Int. Cl.: H01M 4/66, B21B 3/00

(54) **ALUMINIUM-FOLIE MIT VERBESSERTER BENETZBARKEIT**

(71) Anmelder: Speira GmbH, 41515 Grevenbroich (DE)
(72) Erfinder: DRAESE, Stephan, 41334 Nettetal (DE); GRAF, Thomas, 53113 Bonn (DE); SEIFERTH, Oliver, 51143 Köln-Zündorf (DE); SCHMITZ, Volker, 41569 Rommerskirchen (DE)
(74) Vertreter: Cohausz & Florack

(57) **Zusammenfassung**

Eine Aluminiumfolie mit einer Dicke von 4 µm bis 100 µm aus einer Legierung des Typs AA1xxx, AA3xxx und/oder AA8xxx weist einen kaltverfestigten Zustand, enthält auf ihrer Oberfläche eine Walzölauflage mit einem Polyalkylenglycol oder einer eine Polyalkylenoxidstruktur enthaltenden Verbindung und lässt sich gut mit einer Elektroden-Suspension zur Herstellung einer Batteriefolie beschichten.

## Beschreibung

### GEBIET DER ERFINDUNG

Die Erfindung betrifft eine Aluminiumfolie, deren Weiterverarbeitung zur einer Batteriefolie und die Verwendung der Aluminiumfolie zur Herstellung einer Batteriefolie.

### TECHNISCHER HINTERGRUND DER ERFINDUNG

Batterien wie Lithium-Ionen-Batterien werden insbesondere als Speichermedium für elektrische Energie in der Elektromobilität eingesetzt. Die Leistungsfähigkeit solcher Batterien ist abhängig von der Geschwindigkeit und Effizienz der Ladungs- und Massentransportvorgänge beim Entladen und Laden der Batterien. Die Transportvorgänge werden unter anderem von der Struktur der Elektroden in der Batterie bestimmt.

Elektroden und insbesondere die Kathoden umfassen häufig ein Substrat aus einer Metallfolie, die zusätzlich eine Elektrodenbeschichtung bzw. eine Kathodenmasse an der Oberfläche aufweist. Die chemisch-physikalischen Vorgänge an der Grenzfläche zwischen dem Substrat und der Elektrodenbeschichtung haben sich hierbei als entscheidend für die Leistungsfähigkeit der Batterie herausgestellt. Zur Verbesserung der Eigenschaften der Batterie müssen daher die Oberflächeneigenschaften des Substrats in Hinsicht auf eine optimale Haftbarkeit der Elektrodenbeschichtung sowie eine möglichst sichere Kontaktierung angepasst werden.

Aluminiumfolien zur Verwendung in Batterieelektroden, die als Substrat in Elektroden dienen, werden typischerweise über einen Walzprozess hergestellt.

Aluminiumfolien werden während des Walzvorgangs in der Regel mit einem Kühlschmierstoff versehen, um die Reibung im Walzspalt zu verringern, um Aluminium und die Walzen zu kühlen, um den Walzenverschleiß zu verringern und das Festkleben des Walzprodukts während des Walzens zu vermeiden.

Wird eine Beschichtung der Aluminiumfolie mit einem Elektrodenmaterial im walzfettigen, kaltverfestigten Zustand vorgenommen, kann die Restbelegung der Oberfläche mit dem Kühlschmierstoff und weiteren Rückständen aus dem Walzprozess wie Partikel, Abrieb und Reaktionsprodukte zu Benetzungsproblemen und Haftungsproblemen der Elektrodenbeschichtung auf der Aluminiumfolie führen. Zudem kann die Kühlschmierstoffverteilung auf der Oberfläche der Aluminiumfolie nach dem Walzen stark ungleichmäßig sein, so dass Abschnitte mit lokal überhöhter Kühlschmierstoffbelegung ausgebildet werden, in denen eine optimale Beschichtung und Kontaktierung nicht möglich ist.

Für die Verwendung von Aluminiumfolien für Batterien sollte daher die Masse an Kühlschmierstoff vor dem Beschichten mit der Elektrodenbeschichtung reduziert bzw. entfernt werden. Dazu kann beispielsweise die Aluminiumfolie bei niedrigen Temperaturen geglüht werden, um den verbliebenen Kühlschmierstoff zu verdampfen bzw. zu oxidieren, wobei die Aluminiumfolie entfestigt wird. Vor allem beim Glühen mit niedrigen Temperaturen besteht jedoch die Gefahr, dass Rückstände des Kühlschmierstoffs auf der Aluminiumfolie verbleiben und so eine Weiterverarbeitung, beispielsweise ein Beschichten, problematisch ist. Insbesondere kann auch nach dem Glühen aufgrund einer ungleichmäßigen Belegung mit Kühlschmierstoff weiterhin eine lokal stark variierende Benetzbarkeit auftreten. Ebenso kann durch die Erwärmung der Aluminiumfolie die Oxidschicht an der Oberfläche aufwachsen, wobei insbesondere in den Randbereichen eine höhere Dicke der Oxidschicht entsteht. Durch die Abweichungen in der Oxidschichtdicke können nach dem Kalandrieren der Elektrodenbeschichtung unterschiedliche Übergangswiderstände an der Grenzfläche zur Aluminiumfolie entstehen. Zusätzlich fällt mit dem Glühen erheblicher Zeitaufwand an, wobei insbesondere bei niedrigen Temperaturen lange Glühzeiten zum Entfetten notwendig sind, und es entstehen erhöhte Kosten.

Ebenso können Aluminiumfolien chemisch entfettet werden, um die Oberfläche für eine Beschichtung zu konditionieren. Hierzu wird der Kühlschmierstoff in einer Beizentfettung entfernt und die Walzoxidschicht aufgelöst. Beim anschließenden Spülprozess entsteht eine dickere poröse Hydroxidschicht an der Oberfläche der Aluminiumfolie. Diese entsprechend konditionierten Aluminiumfolien zeichnen sich durch homogene Oberflächeneigenschaften und durch hohe Benetzbarkeiten aus, womit die Folien auch für eine Beschichtung mit wasserbasierten Suspensionen geeignet sind. Bei dieser chemischen Entfettung entstehen jedoch auch vergleichsweise hohe Prozesskosten.

Als alternative Oberflächenbehandlung zur Entfettung und Konditionierung der Oberfläche kann eine Flammentfettung der Aluminiumfolie vorgenommen werden. Die mit der Flammentfettung notwendigen hohen Energieeinträge können jedoch zu einer unerwünschten Entfestigung der Aluminiumfolie und zu einem signifikanten Aufwachsen der Oxidschicht führen, woraus eine schlechtere Kontaktierung der Oberfläche der Aluminiumfolie folgt. Ähnliche Ergebnisse ergeben sich durch eine NIR- und eine Plasmabehandlung.

Auch eine Coronabehandlung der Oberfläche eines Aluminiumbands oder eine Aluminiumfolie ist zu deren Entfettung und Konditionierung geeignet. Insbesondere wird durch die Coronabehandlung auch die Oberflächenspannung gesteigert.

### ZUSAMMENFASSUNG DER ERFINDUNG

Aufgabe der Erfindung ist es, eine Aluminiumfolie für Batterieelektroden bereitzustellen, die keine kostenintensive Konditionierung der Oberfläche erfordert und die eine gute Benetzbarkeit und Haftung für verschiedenartige Elektrodenbeschichtungen aufweist und zugleich einen effektiven elektrischen Kontakt zur Elektrodenbeschichtung ermöglicht. Außerdem sollte die erzeugte Oberfläche eine gute Korrosionsstabilität gegen die verwendeten Elektrolyte in einer Batteriezelle aufweisen.

Gelöst wird diese Aufgabe durch eine Aluminiumfolie aus einer Legierung des Typs AAlxxx, AA3xxx und/oder AA8xxx, die einen kaltverfestigten Zustand aufweist, die an ihrer Oberfläche ein Polyalkylenglycol oder eine eine Polyalkylenoxidstruktur enthaltende Verbindung aufweist.

Gegenstand der Erfindung ist ferner ein Verfahren zur Herstellung der zuvor genannten Batteriefolie.

Gegenstand der Erfindung ist schließlich die Verwendung der Aluminiumfolie als Batteriefolie.

### BEVORZUGTE AUSFÜHRUNGSFORMEN DER ERFINDUNG

Die erfindungsgemäße Aluminiumfolie kann aus einer Legierung des Typs AA 1xxx, AA 3xxx und/oder AA 8xxx bestehen. Aluminiumlegierungen des Typs AA 1xxx verursachen aufgrund der geringen Anteile an Legierungszusätzen nur sehr geringe unerwünschte chemische Prozesse zwischen der Elektrodenbeschichtung und der Oberfläche der Aluminiumfolie und weisen damit nur geringe Korrosionseffekte auf. Hierbei können unter anderem Legierungen des Typs AA 1050, AA 1100, AA 1200 oder AA 1085 verwendet werden, die gegenüber Reinaluminium verbesserte mechanische Kennwerte aufweisen können. Die mechanischen Eigenschaften können über die Verwendung von Legierungen des Typs AA 3xxx sowie AA 8xxx zusätzlich verbessert werden.

Es hat sich herausgestellt, dass die Oberfläche einer Aluminiumfolie, die während des Kaltwalzens unter Verwendung eines im Wesentlichen von Fettsäuren und Fettalkoholen freien Kühlschmierstoffs aber ein Polyalkylenglycol oder eine ein Polyalkylenoxid enthaltende Verbindung aufweist, erzeugt worden ist, über eine hohe Oberflächenenergie verfügt und damit eine optimale Oberfläche für eine Verwendung als Substrat in einer Elektrode einer Batterie erzielen lässt. Die Oberfläche der Aluminiumfolie ist im Wesentlichen frei von einer Fettsäure und frei von einem Fettalkohol. Diese Substanzen sind in der Regel in Kühlschmierstoffen enthalten und folglich unmittelbar nach dem Kaltwalzen von Aluminium auf dessen Oberfläche als Bestandteile des restlichen Kühlschmierstoffs vorhanden. Im Wesentlichen frei von einer Fettsäure und frei von einem Fettalkohol bedeutet, dass auf einer Oberflächenseite der Aluminiumfolie jeweils weniger als 1 mg/m² einer Fettsäure und/oder eines Fettalkohol vorhanden ist.

Die Oberfläche der Aluminiumfolie wird nur durch den Walzprozess eingestellt und erfährt insbesondere nach Beendigung des Kaltwalzens keine Wärmebehandlung, Flammentfettung, chemische Entfettung und/oder Coronabehandlung. Die Aluminiumfolie besitzt eine gute Anfangshaftung für eine Elektrodenbeschichtung.

Die Aluminiumfolie weist daher vorteilhafterweise einen kaltverfestigten Zustand auf, womit sich die erfindungsgemäße Aluminiumfolie durch das kaltverfestigte Gefüge von Aluminiumfolien für Batterieelektroden unterscheidet, die beispielsweise durch Wärmebehandlung oder Flammentfettung konditioniert wurden.

In der Herstellung von Aluminiumbändern und -folien werden Walzemulsionen und Walzöle als Kühlschmierstoffe verwendet, die einen großen Einfluss auf die Wirtschaftlichkeit der Produktion und die Qualität der Erzeugnisse haben. Beim Walzen soll der Reibwert zwischen Arbeitswalze und Walzgut weder zu hoch noch zu niedrig sein. Ein niedriger Reibwert verbessert die Schmierung im Walzspalt, so dass Energieaufwand, Reibungswärme und Walzenverschleiß im Walzprozess verringert werden.

Die erfindungsgemäße Aluminiumfolie wird durch Kaltwalzen eines Aluminiumbands in Gegenwart eines Kühlschmierstoffs erhalten, der ein mineralölbasiertes oder synthetisches Grundöl, und einen Polyalkylenglykol und/oder eine eine Polyalkylenoxidstruktur enthaltende Verbindung enthält und im Wesentlichen frei von Fettsäuren und Fettalkoholen ist.

Die erhaltene Aluminiumfolie ist daher frei von durch Fettsäuren und Fettalkoholen verursachten, visuell sichtbaren Fehlerbildern und weist eine überraschend hohe Benetzbarkeit für N-Methyl-2-pyrrolidon (NMP) auf. Dies ist ein Indikator für die Beschichtbarkeit der Aluminiumfolie mit einer Elektrodenbeschichtung. Ferner benötigt die erfindungsgemäße Aluminiumfolie keine Coronabehandlung, wenn eine hohe Oberflächenenergie der Oberfläche der Aluminiumfolie gewünscht ist.

Der erfindungsgemäß verwendete Kühlschmierstoff ist öllöslich. Er ist nicht mit Wasser mischbar. Der erfindungsgemäße Kühlschmierstoff ist frei von geradkettigen Olefinen, insbesondere frei von alpha-Olefinen mit 6 bis 40 Kohlenstoffatomen.

Im Wesentlichen frei von einer Fettsäure im Sinne des hier verwendeten Kühlschmierstoffs bedeutet, dass eine Fettsäure als Schmieradditiv in einem Anteil von höchstens 0,2 Gew.-%, vorzugsweise höchstens 0,1 Gew.-%, bezogen auf die Masse des Kühlschmierstoffs, enthalten sind.

Im Wesentlichen frei von einem Fettalkohol im Sinne der Erfindung bedeutet, dass ein Fettalkohol als Schmieradditiv in einem Anteil von höchstens 0,4 Gew.-%, vorzugsweise höchstens 0,3 Gew.-%, bezogen auf die Masse des Kühlschmierstoffs, enthalten ist. Sind der Fettsäureanteil und/oder der Fettalkoholanteil im erfindungsgemäßen Schmierstoff oberhalb des zuvor angegebenen Höchstwerts verschlechtern sich die Benetzungseigenschaften des damit gewalzten Aluminiumprodukts.

Erfindungsgemäß zu verwendende Polyalkylenglykole umfassen übliche Polyalkylenglykole und Verbindungen mit einer Polyalkylenglykolstruktur wie Polyoxyalkylen-Fettalkoholether (ethoxylierter Fettalkohol). Der Alkylenrest im Polyalkylenglykol oder Polyalkylenoxid kann Ethylen, Propylen oder Butylen sein (Polyethylenglykole, Polypropylenglykole, Polybutylenglykole). Der Fettalkohol kann 8 bis 20 Kohlenstoffatome umfassen. Der Fettalkoholrest kann beispielsweise Decanol, Laurylalkohol, Myristylalkohol, Cetylalkohol, Stearylalkohol sein. Diese Verbindungen haben schmierende und kühlende Eigenschaften beim Kaltwalzen von Aluminium. Der nachfolgend verwendet Begriff Polyalkylenglykol umfasst Polyalkylenglykole und Verbindungen mit einer Polyalkylenglykolstruktur.

Die im Kühlschmierstoff verwendeten Polyalkylenglykole können eine kinematische Viskosität von 5 mm²/s bis 250 mm²/s, vorzugsweise 10 mm²/s bis 200 mm²/s bei 40 °C aufweisen. Die erfindungsgemäß eingesetzten Polyalkylenglykole liegen oberhalb von 5 °C als Flüssigkeit vor und sind daher leicht zu dosieren. Sie können in Wasser unlöslich oder in Wasser löslich sein.

Besonders bevorzugt werden als Polyalkylenglykole oder eine Polyalkylenoxid enthaltende Verbindung ethoxylierte Fettalkohole wie Tetraethylenglykolmonododecylether verwendet. Entsprechende Polyalkylenglykole sind im Handel erhältlich.

Der Anteil des Polyalkylenglykols im Kühlschmierstoff kann bis zu 10 Gew.-%, insbesondere 0,01 bis 8 Gew.-% und besonders bevorzugt 0,01 bis 5 Gew.-%, jeweils bezogen auf die Masse des Walzöls, betragen. Das Polyalkylenglykol ersetzt mithin die üblicherweise in Kaltwalz-Schmierstoffen vorhandenen Additive Fettsäuren und Fettalkohole. Der erfindungsgemäße Kühlschmierstoff besitzt eine gute Schmierwirkung oder tribologische Wirkung ohne die zuvor genannten nachteiligen Wirkungen von Fettsäuren und Fettalkoholen.

Der verwendete Kühlschmierstoff basiert auf einem Kohlenwasserstoff-Grundöl mit einer Siedelage im Bereich von 180°C bis 300 °C, gemessen nach DIN EN ISO 3405. Das Grundöl enthält geradkettige und verzweigte Kohlenwasserstoffe. Das Grundöl kann ein Kohlenwasserstoffgemisch enthalten. Der Anteil an Aromaten darin kann vorzugsweise kleiner als 1 Gew.-%, bezogen auf die Masse des Grundöls, sein. Das Grundöl kann ein Mineralöl oder ein synthetisches Öl sein. Es kann n-Paraffine und/oder Iso-Paraffine enthalten.

Die kinematische Viskosität dieses aromatenarmen Kohlenwasserstoffgemischs kann 1,5 bis 3,6 mm²/s bei 20 °C betragen. Diese kinematische Viskosität liefert gute Fließeigenschaften im Kaltwalzgerüst und ermöglicht eine gleichmäßige Schmierung und Kühlung. Der Anteil des Grundöls im erfindungsgemäßen Kühlschmierstoff kann 90 Gew.-% und mehr, bezogen auf die Masse des Kühlschmierstoffs ausmachen. Der Anteil des Grundöls kann beispielsweise 90 Gew.-% bis 99 Gew.-% der Masse des Kühlschmierstoffs betragen.

Der Kühlschmierstoff kann übliche Additive zur Steigerung der Hochdruck-Schmiereigenschaften, Antioxidantien und Leitfähigkeitsverbesserer enthalten.

Additive zur Steigerung der Hochdruck-Schmiereigenschaften umfassen Ester geradkettiger gesättigter C₁₀₋₁₄-Carbonsäuren. Solche umfassen beispielsweise Butylstearat und Methyldodecanoat. Methyldodecanoat ist besonders bevorzugt. Diese können in einer Menge von bis zu 10 Gew.-%, vorzugsweise 1 bis 8 Gew.-%, bezogen auf die Masse des Kühlschmierstoffs enthalten sein.

Geeignete Antioxidantien umfassen sterisch gehinderte einwertige, zweiwertige und dreiwerte Phenole und mehrkernige Phenole, insbesondere tert.-Butylphenole. Ein typischer Vertreter dieser Gruppe ist das Methylen-4,4'-bis-(2,6-di-tert-butylphenol). Weitere geeignet Antioxidantien umfassen Amine wie Diphenylamin, Phenyl-α-naphthylamin, p,p'-Tetramethyldiaminodiphenylmethan und N,N'-Diphenyl-p-phenyldiamin. Ein zuvor genanntes Antioxidans kann in Kombination mit weiteren Antioxidantien wie Sulfiden und Polydisulfiden in üblichen Konzentrationen eingesetzt werden.

Der verwendete Kühlschmierstoff erlaubt die Weiterverarbeitung des nach dem Kaltwalzen erhaltenen Aluminiumprodukts für eine Reihe von Anwendungen, ohne dass eine Coronabehandlung erforderlich ist. Trotz nicht durchgeführter Coronabehandlung wird eine für viele Anwendungen ausreichende Oberflächenenergie auf der Oberfläche der Aluminiumfolie erreicht. Darüber hinaus weist die Oberfläche der Aluminiumfolie eine hohe Benetzbarkeit für Wasser und N-Methyl-2-pyrrolidon (NMP) auf.

Die Aluminiumfolie enthält auf ihrer Oberfläche Reste des im Kühlschmierstoff eingesetzten Polyalkylenglykols. Diese Reste sind eingebettet in das Grundöl. Die Menge des Polyalkylenglykols oder der eine Polyalkylenoxidstruktur enthaltenden Verbindung auf der Oberfläche der erfindungsgemäßen Aluminiumfolie nach dem Kaltwalzen kann bis zu 5 mg/m², beispielsweise 0,01 mg/m² bis 5 mg/m², betragen.

Es wurde festgestellt, dass durch den Einsatz des hier beschriebenen Kühlschmierstoffs auch eine deutliche Verringerung der Anzahl an visuell sichtbaren Fehlerbildern auf den erzeugten Aluminiumfolien erfolgt. Das ist vermutlich darauf zurückzuführen, dass die Walzölkomponenten keine schwer entfernbaren Ablagerungen auf dem Walzgut bilden. Das Weglassen von Fettalkoholen scheint diese Verringerung noch zu verstärken.

Die Oberflächenspannung der Aluminiumfolie kann über die Art des im Kühlschmierstoff eingesetzten Polyalkylenglycols oder der eine Polyalkylenoxidstruktur enthaltenden Verbindung spezifisch für verschiedene Arten von Elektrodenbeschichtungen eingestellt werden. Insbesondere wird die Oberflächenspannung der Aluminiumfolie über die Art des im Kühlschmierstoff eingesetzten Polyalkylenglycols oder der eine Polyalkylenoxidstruktur enthaltenden Verbindung derart eingestellt, dass die Oberflächenspannung der Aluminiumfolie annähernd gleich groß ist wie die Oberflächenspannung der Suspension der Elektrodenbeschichtung. Vorteilhafterweise ist die Oberflächenspannung der Aluminiumfolie "annähernd gleich" wie die Oberflächenspannung der Suspension für die Elektrodenbeschichtung, wenn sie in einem Bereich von ± 20% der Oberflächenspannung der Suspension für die Elektrodenbeschichtung liegt.

Die Oberflächenspannung entsprechender Suspensionen wird unter anderem durch die Lösungsmittel bestimmt, wobei oft nicht polares NMP mit optionalen Beimischungen für Elektrodenmaterialien verwendet wird. Überraschenderweise hat sich herausgestellt, dass durch die Art der Herstellung der erfindungsgemäßen Aluminiumfolie mit einem ausgewählten Kühlschmierstoff vergleichsweise hohe Oberflächenspannungen erhältlich sind, so dass die erfindungsgemäße Aluminiumfolie auch mit Suspensionen mit Lösemitteln höherer Polarität und sogar rein wasserbasierten Suspensionen eingesetzt werden kann.

In einer Ausgestaltung der Erfindung beträgt der Kontaktwinkel im Tropfentest auf der Oberfläche der Aluminiumfolie von 75° bis 50°. Mit dem Tropfentest wird ein Tropfen aus vollentsalztem Wasser mit einem Tropfenvolumen von 5 µl auf die Oberfläche der Aluminiumfolie gebracht. Unter Raumklimabedingungen (22°C ± 2 °C, 30% ± 10 % rel. Luftfeuchte) wird der Kontaktwinkel des Tropfens mit dem Kontaktwinkelmessgerät Drop Shape Analyzer DSA10, welches vom Unternehmen Krüss kommerziell erhältlich ist, bestimmt. Der Kontaktwinkel im Tropfentest ist ein weiterer Indikator für die Benetzbarkeit und damit die Eignung der Aluminiumfolie für eine Verwendung als Substrat in Batterieelektroden, wobei kleinere Kontaktwinkel auf eine bessere Benetzbarkeit deuten. Mit Kontaktwinkeln im Tropfentest von 85° bis 45° lassen sich eine Vielzahl von Suspensionen für die Aluminiumfolie prozesssicher einsetzen. Insbesondere im Bereich von 55° bis 85° und im Bereich von 65° bis 80° werden gute Ergebnisse erzielt.

Zur Herstellung der Elektrodenfolie kann die Aluminiumfolie als Substrat typischerweise in einem Schlitzgussverfahren beschichtet werden. Für eine möglichst genaue Einstellung der Nassfilmdicke und der Beschichtungsbreite sowie zum Erreichen einer homogenen Beschichtung ist eine gute Benetzbarkeit der Oberfläche der Aluminiumfolie mit einer Suspension der Elektrodenbeschichtung (mit einer Aufschlämmung) erforderlich. Die Benetzbarkeit hängt hierbei von den Oberflächenspannungen der Suspension und der Aluminiumfolie ab, wobei die Oberflächenspannung der Aluminiumfolie vorteilhafterweise annähernd gleich groß ist wie die Oberflächenspannung der Suspension oder höher als die Oberflächenspannung der Suspension ist. Durch die Verwendung der Art und der Menge des im hier beschriebenen Kühlschmierstoff eingesetzten Polyalkylenglycols oder der eine Polyalkylenoxidstruktur enthaltenden Verbindung lässt sich die Oberflächenspannung der Aluminiumfolie ohne ein Aufwachsen der Oxidschicht prozesssicher einstellen und auch über die spezifische Auswahl des Energieeintrags derart beeinflussen, dass die Oberfläche der Aluminiumfolie für verschiedene Zusammensetzungen von Elektroden-Beschichtungssuspensionen geeignet ist.

Weil kein Beizen erfolgt, wird die homogene und vergleichsweise dünne Walzoxidschicht erhalten. Diese Struktur der Oxidschicht ermöglicht ein zuverlässiges Durchdringen der Oxidschicht durch eine Aktivkomponente des Elektrodenmaterials, womit ein guter elektrischer Anschluss der Aluminiumfolie in der Batterie gewährleistet wird. Die vorhandene vergleichsweise dichte Oxidschicht ermöglicht eine gute Passivierung und damit einen hohen Korrosionsschutz der Aluminiumfolie. Die erfindungsgemäße Aluminiumfolie eignet sich durch die spezifische Topographie aus dem Walzprozess und die geringe Oxidschichtdicke nach der Oberflächenbehandlung auch hervorragend zum Ultraschallschweißen.

In einer weiteren Ausgestaltung weist die Aluminiumfolie eine Passivierungsschicht auf, womit eine Korrosion an der Grenzfläche zwischen dem Aluminium und dem Elektrolyt unterbunden wird. Mit der Oberflächenbehandlung werden gute Passivierungseigenschaften der Aluminiumfolie erreicht, so dass sich insbesondere mit den Elektrolytbestandteilen der Batteriezelle Passivierungsschichten (z.B. umfassend AlF₃) zum verbesserten Korrosionsschutz ausbilden können.

In einer weiteren Ausgestaltung der Erfindung ist zumindest auf einem Abschnitt der Oberfläche der Aluminiumfolie eine Elektrodenbeschichtung angeordnet. Eine solche Elektrodenbeschichtung umfasst insbesondere mindestens ein Metalloxid, beispielsweise ein Lithium-Cobalt(III)-Oxid. Mit der Elektrodenbeschichtung ist die Aluminiumfolie insbesondere als Kathodenmaterial ausgestaltet.

Die folgenden Beispiele dienen der weiteren Erläuterung der Erfindung.

### BEISPIELE

### Beispiel 1 - Bestimmung der Reibkoeffizienten verschiedener Schmierstoffe

Die Schmiereigenschaften des erfindungsgemäßen Kühlschmierstoffs wurden mit einer MTM2 Mini-Traction Maschine der Firma PCS Instruments in der Standard-Konfiguration mit einer Last ausübenden Stahlkugel (Durchmesser 19,05 mm) und einer mit unterschiedlichen Geschwindigkeiten drehbaren Aluminiumprüf-Scheibe ermittelt. Die Belastung der Stahlscheibe durch die Kugel (¾"Kugellagerstahl AISI 52100 (100Cr6, 1.3505)) wurde auf 40N (0,5 GPa Kontaktdruck) eingestellt und der Reibkoeffizient (RK) bei unterschiedlichen Rollgeschwindigkeiten von. Wiedergeben sind in der folgenden Tabelle 1 die zwei Mittelwerte (MW) der bei Rollgeschwindigkeiten von 0,2 bis 200 m/min gemessenen Reibkoeffizienten. Die Scheibe war aus einer Aluminiumlegierung AA1XXX gebildet. Das Gleit/Roll-Verhältnis (SRR) während des Tests betrug 50%. Nach dem Tribotest wurde die Benetzbarkeit der Aluminiumprüfscheiben gegenüber Wasser geprüft. Hierzu wurde auf den Scheiben neben der Laufspur Tropfentests mit einem Tropfenvolumen von 5µl mit voll entsalztem Wasser durchgeführt. Die standardisierte Versuchsdurchführung entspricht der internen Arbeitsanweisung "Hydro CO 0620". Die kinematische Viskosität wurde gemäß DIN 51562 gemessen.

| **Tabelle 1** | | | | |
|---|---|---|---|---|
| Schmierstoffprobe | Viskosität mm²/s | RK MW 0,2-200m/min | Tropfengröße 5µl Wasser in mm | Bemerkungen |
| 1 Grundöl | 1,9 | 0,07; 0,08 | 3,1 | Schmierfilmbildung suboptimal; Metallseifenbildung |
| 2 Grundöl + 0,9% Fettsäure + 0,9%Methyllaurat | 1,9 | 0,06; 0,05 | 2,5 | guter Schmierfilm; mehr Abrieb im KSS aber saubere Scheibe |
| 3 Walzöl mit 1% PAG* (Visko 20 mm²/s bei 40°C) | 1,9 | 0,05; 0,05 | 3,1 | bessere Schmierfilmbildung als reines Walzöl |
| 4 Walzöl mit 2% PAG* (Visko 20 mm²/s bei 40°C) | 1,9 | 0,04; 0,04 | 3,5 | Schmierfilmbildung gut; kaum Laufspur auf der Kugel |
| 5 Walzöl mit 4% PAG* (Visko 20 mm²/s bei 40°C) | 2,0 | 0,03; 0,03 | 3,5 | kaum Abrieb |
| 6 Walzöl mit 2% PAG enth. Verbindung** (Visko 20 mm²/s bei 40°C) | 1,9 | 0,06; 0,06 | 3,3 | gute Schmierfilmbildung; etwas Abrieb; akzeptable Benetzung |
| 7 Walzöl mit 5% PAG enth. Verbindung** (Visko 20 mm²/s bei 40°C) | 2,0 | 0,05; 0,06 | 6,6 | gute Schmierfilmbildung; etwas Abrieb; gute Benetzung |
| 8 Walzöl mit 10% PAG enth. Verbindung** (Visko 20 mm²/s bei 40°C) | 2,2 | 0,03; 0,03 | 10,7 | gute Schmierfilmbildung; kaum Abrieb; sehr gute Benetzung |
| 9 Walzöl mit 5% PAG*** (Visko 33 mm²/s bei 40 °C) | 2,1 | 0,06; 0,08 | 3,6 | Schmierfilmausbildung gut |
| 10 Walzöl mit 5% PAG*** (Visko 57 mm²/s bei 40 °C) | 2,1 | 0,09; 0,08 | 4,5 | Schmierfilmausbildung gut; kaum Abrieb; kaum Laufspur auf der Kugel |
| 11 Walzöl mit 5% PAG*** (Visko 77 mm²/s bei 40 °C) | 2,1 | 0,07; 0,07 | 3,5 | Schmierfilmausbildung gut; wenig Laufspur auf der Kugel |
| 12Walzöl mit 5% PAG**** (Visko 175 mm2/s bei 40 °C) | 2,3 | 0,08; 0,06 | 3,3 | Schmierfilmausbildung gut; wenig Laufspur auf der Kugel |

| | | | | |
|---|---|---|---|---|
| * PAG = ein EO/PO Copolymer mit einer kinematischen Viskosität von 20mm²/s bei 40°C ** ein Polyethylengylkolmonodocylether mit einer kinematischen Viskosität von 20mm²/s bei 40°C *** jeweils: Poly(proplylenglycol)monobutylether mit kin. Viskositäten von 33, 57 und 77 mm²/s bei 40°C **** Mischung von Polyproplylenglycolen mit kin. Viskositäten von 75 und 225 mm²/s bei 40°C, Viskosität der Mischung ist 175 mm²/s bei 40°C | | | | |

Die Schmierfilmbildung mit dem Grundöl allein ist suboptimal; es kommt zur Metallseifenbildung. Die Schmierstoffprobe 2 liefert einen guten Schmierfilm mit mehr Abrieb aber mit einer sauberen Scheibe. Die erfindungsgemäße Schmierstoffprobe 3 liefert eine bessere Schmierfilmbildung. Dasselbe gilt für die Probe 4, die darüber hinaus kaum eine Laufspur auf der Kugel zeigt. Das gilt auch für Probe 5, die kaum Abrieb liefert. Die Proben 6 bis 12 zeigen eine gute Schmierfilmausbildung. Proben 6 und 7etwas Abrieb, Probe 8 zeigt kaum Abrieb. Probe 6 zeigt eine akzeptable Benetzung mit Wasser, Probe 7 eine gute Benetzung und Probe 8 eine sehr gute Benetzung mit Wasser. Probe 10 liefert kaum Abrieb und kaum eine Laufspur auf der Kugel. Proben 11 und 12 liefern wenig Laufspur auf der Kugel.

### Beispiel 2 - Bestimmung der Benetzungswinkel nach Kaltwalzen mit verschiedenen Schmierstoffen

Auch in dem folgenden Versuch wurde eine Aluminiumfolie einer Legierung vom Typ AA1XXX zur Bestimmung des Benetzungswinkels auf der Oberfläche der Folie verwendet. Gemessen wurden die Kontaktwinkel (KW) bei der Benetzung mit Wasser und mit NMP. Die Bestimmung des Benetzungswinkels oder Kontaktwinkels erfolgte im Tropfentest bei einem Tropfenvolumen von 5 µl mit vollentsalztem Wasser oder NMP mit dem Drop Shape Analyzer DSA 10 der Krüss GmbH, Hamburg, Deutschland. Die Messungen sind Mittelwerte von Einzelmessungen an vier verschiedenen Positionen auf der Oberfläche der Folienprobe. Die Ergebnisse der Messungen sind in der folgenden Tabelle 2 gezeigt. Ferner wurde über die Bestimmung des Kontaktwinkels die Oberflächenenergie (SFE) ermittelt. Entsprechende Werte sind in der Tabelle 2 angegeben.

| **Tabelle 2 Belegung** | KW vs. H₂O | SFE (total) mN/m | KW vs. NMP |
|---|---|---|---|
| Walzöl (Grundöl) | 71° | 30 | 32° |
| Grundöl mit 0,1% Fettsäure LS | 87° | 26 | 38° |
| Grundöl mit 0,5% Fettsäure LS | 111° | 20 | 67° |
| Grundöl mit 1% Fettalkohol C12 | 78° | 26 | 40° |
| Grundöl mit 1% Fettalkohol C12/C14 (70:30) | 92° | 22 | 46° |
| Grundöl mit 2% Fettalkohol C12/C14 (70:30) | 85° | 22 | 43° |
| Grundöl mit 0,1% einer PAG enthaltenden Verbindung* (Visko 20 mm²/s bei 40°C) | 74° | 34 | 20° |
| Grundöl mit 0,5% einer PAG enthaltenden Verbindung* (Visko 20 mm²/s bei 40°C) | 75° | 29 | 24° |
| Grundöl mit 1% einer PAG enthaltenden Verbindung* (Visko 20 mm²/s bei 40°C) | 69° | 32 | 25° |
| Grundöl mit 0,5% PAG** (Visko 77 mm²/s bei 40 °C) | 53° | 45 | 20° |
| Grundöl mit 5% PAG** (Visko 77 mm²/s bei 40 °C) | 62° | 37 | 17° |

| | | | |
|---|---|---|---|
| * Polyethylenglycolmonodecylether ** Poly(propylenglycol)monobutylether | | | |

Die in der Tabelle 2 wiedergegebenen Ergebnisse zeigen, dass die Schmierstoffe mit einer Verbindung, die eine Polyalkylenoxidstruktur aufweist, zu Aluminiumfolien mit erheblich geringeren Kontaktwinkeln beispielsweise für NMP führen. Das kann für bestimmte Anwendungen, insbesondere Anwendungen als Batteriefolie, hilfreich sein.

## Patentansprüche

1. Aluminiumfolie einer Dicke von 4 µm bis 100 µm aus einer Legierung des Typs AAlxxx, AA3xxx und/oder AA8xxx, die einen kaltverfestigten Zustand aufweist, und die auf ihrer Oberfläche eine Walzölauflage aufweist, welche ein Polyalkylenglykol und/oder eine eine Polyalkylenoxidstruktur enthaltende Verbindung enthält.

2. Aluminiumfolie nach Anspruch 1, **dadurch gekennzeichnet, dass** das Polyalkylenglycol oder die eine Polyalkylenoxidstruktur enthaltende Verbindung auf einer Oberflächenseite der Aluminiumfolie in einer Menge von 0,01 mg/m² bis 5 mg/m² enthalten ist.

3. Aluminiumfolie nach Anspruch 1 oder 2, **dadurch gekennzeichnet, dass** die Oberfläche der Aluminiumfolie nach dem Kaltwalzen keiner Coronabehandlung unterzogen worden ist.

4. Aluminiumfolie nach einem oder mehreren der Ansprüche 1 bis 3, **dadurch gekennzeichnet, dass** der Kontaktwinkel im Tropfentest mit NMP auf der Oberfläche der Aluminiumfolie kleiner als 32 ° ist, insbesondere 24° bis 15 ° beträgt.

5. Aluminiumfolie nach einem oder mehreren der Ansprüche 1 bis 4, **dadurch gekennzeichnet, dass** die Oberflächenenergie der Aluminiumfolie größer als 30 mN/m, insbesondere 32 mN/m bis 50 mN/m beträgt.

6. Aluminiumfolie nach einem oder mehreren der vorhergehen Ansprüche, **dadurch gekennzeichnet, dass** die Oberfläche der Aluminiumfolie im Wesentlichen frei von einer Fettsäure und einem Fettalkohol ist.

7. Aluminiumfolie nach einem oder mehreren der vorhergehen Ansprüche, **dadurch gekennzeichnet, dass** die Aluminiumfolie eine Dicke von 6 µm bis 50 µm aufweist.

8. Aluminiumfolie nach einem oder mehreren der vorhergehen Ansprüche, **dadurch gekennzeichnet, dass** die Oberfläche der Aluminiumfolie im Wesentlichen frei von einer Fettsäure und/oder einem Fettalkohol ist.

9. Verfahren zur Herstellung einer Batteriefolie, **dadurch gekennzeichnet, dass** man ein Aluminiumband einer Legierung des Typs AAlxxx, AA3xxx und/oder AA8xxx in Gegenwart eines Kühlschmierstoffs einem Kaltwalzen zu einer Aluminiumfolie einer Dicke von 4 µm bis 100 µm unterzieht, wobei der Kühlschmierstoff auf einem Mineralöl oder einem synthetischen Öl basiert, Polyalkylenglykol und/oder eine eine Polyalkylenoxidstruktur enthaltende Verbindung enthält und im Wesentlichen frei von einer Fettsäure und einen Fettalkohol ist, und die Oberfläche der Aluminiumfolie mit einer Elektrodenbeschichtungsmasse beschichtet.

10. Verwendung einer Aluminiumfolie nach einem der Ansprüche 1 bis 8 zur Herstellung einer Batteriefolie.
